# EUROPÄISCHE PATENTSCHRIFT

(11) **EP 1 373 375 B1**
(45) Veröffentlichungstag und Bekanntmachung des Hinweises auf die Patenterteilung: **16.02.2005**
(21) Anmeldenummer: 02704744.8
(22) Anmeldetag: 09.03.2002
(51) Int. Cl.: C08J 5/04, B29B 15/10, C08L 79/08

(54) **VERFAHREN ZUR HERSTELLUNG EINES THERMOPLASTISCH VERFORMBAREN, FASERVERSTÄRKTEN HALBZEUGS AUF BASIS VON POLYETHERIMIDEN**
METHOD OF PRODUCING A THERMOFORMABLE, FIBER-REINFORCED SEMI-FINISHED PRODUCT ON THE BASIS OF POLYETHER IMIDES
PROCEDE DE FABRICATION D'UN DEMI-PRODUIT RENFORCE PAR FIBRES A DEFORMABILITE THERMOPLASTIQUE A BASE DE POLYETHERIMIDES

(30) Priorität: 24.03.2001 DE 10114554
(43) Veröffentlichungstag der Anmeldung: 02.01.2004
(73) Patentinhaber: Quadrant Plastic Composites AG, 5600 Lenzburg (CH)
(72) Erfinder: DITTMAR, Harri, 67271 Battenberg (DE)
(74) Vertreter: Wagner, Jutta, Dr.
(86) Internationale Anmeldenummer: PCT/EP2002/002607
(87) Internationale Veröffentlichungsnummer: WO 2002/077076

(56) Entgegenhaltungen:
- EP-A- 0 387 566
- DE-A- 3 614 533
- PATENT ABSTRACTS OF JAPAN vol. 015, no. 068 (C-0807), 18. Februar 1991 (1991-02-18) & JP 02 293433 A (NITTO BOSEKI CO LTD), 4. Dezember 1990 (1990-12-04)
- DATABASE WPI Week 8922 Derwent Publications Ltd., London, GB; AN 1989-162059 XP002200619 & JP 01 104850 A (MITSUBISHI RAYON CO LTD) , 21. April 1989 (1989-04-21)

## Beschreibung

Die Erfindung betrifft ein Verfahren zur Herstellung eines thermoplastisch verformbaren, faserverstärkten Halbzeugs aus einem Mischvlies, welches Polyetherimid- (PEI-) Fasern und Verstärkungsfasern enthält. Weiter betrifft die Erfindung die Verwendung des Halbzengs zur Herstellung von dreidimensionalen Fertigteilen durch Heißumformen in einer Presse, z.B. zur Herstellung von Fertigteilen für die Luft- und Raumfahrt. Thermoplastisch verformbare Halbzeuge, welche Verstärkungsfasern, insbesondere Glasmatten enthalten, werden in zunehmendem Maße zur Herstellung von Formteilen insbesondere für Kraftfahrzeugteile eingesetzt. Derartige "Kunststoffbleche" zeichnen sich durch hohe Zähigkeit und Festigkeit aus. Diese GMT-Halbzeuge werden in großtechnischem Maßstab hergestellt durch Zusammenführen von Endlos-Glasmatten und Thermoplast-Schmelzebahnen auf einer Doppelbandpresse. Diese Arbeitsweise erfordert jedoch einen hohen Energieaufwand, da die zähflüssige Schmelze in die Matte eingepreßt werden muß. Da die Glasmatten im allgemeinen aus Faserbündeln aufgebaut sind, ist die Tränkung nie ganz vollständig und gleichmäßig, so daß mikroskopisch inhomogene Bereiche auftreten, was zu hohen Standardabweichungen in den mechanischen Eigenschaften führt. Da PEI-Schmelzen besonders zähviskos sind, können entsprechende Halbzeuge nach dem GMT-Verfahren in der Praxis nicht hergestellt werden.

Ein anderes, technisch angewandtes Verfahren lehnt sich an die Papierherstellung an. Thermoplastfasern und Verstärkungsfasern werden als wäßrige Aufschlämmung miteinander vermischt, die Aufschlämmung wird abgepreßt und das erhaltene Mischvlies wird getrocknet und heiß verpreßt. Hier muß mit großen Mengen Wasser hantiert werden und das mit Hilfsmitteln verunreinigte Abwasser muß gereinigt werden. Außerdem können hier nur verhältnismäßig kurze Fasern mit einer maximalen Länge von 2,5 cm eingesetzt werden, was unzureichende mechanische Eigenschaften zur Folge hat.

In der DE-A 36 14 533 ist ein Verfahren zur Herstellung von Formkörpern aus thermoplastischen Kunststoffen, die eine Verstärkungseinlage enthalten, beschrieben. Dabei wird in Anlehnung an die Textilfasertechnologie ein Mischvlies aus Thermoplastfasern und Verstärkungsfasern nach dem Krempel- oder Airlay-Verfahren hergestellt und z.B. durch Nadeln verfestigt. Zuschnitte aus diesem Mischvlies werden erwärmt und direkt, ohne vorheriges Konsolidieren, zu dreidimensionalen Formkörpern verpreßt. Eine vollständige Durchtränkung ist hierbei, vor allem bei kompliziert geformten Bauteilen, jedoch kaum möglich, so daß die mechanischen Eigenschaften der Formteile zu wünschen übrig lassen. Thermoplastfasern aus PEI sind nicht erwähnt.

Die Herstellung eines konsolidierten Halbzeugs mit einer Dicke von 1,25 bis 2,5 mm ist in US-A 4,948,661 beschrieben. Zunächst wird in einem Trockenverfahren ein Mischvlies aus Thermoplastfasern und Verstärkungsfasern hergestellt. Dieses Mischvlies wird jedoch nicht vernadelt, sondern wellenförmig zusammengefaltet und direkt durch Heißverpressen zum Halbzeug konsolidiert. Infolge der fehlenden Verfestigung des Mischvlieses ist das Konsolidieren in der Praxis problemlos nur diskontinuierlich möglich. Ein kontinuierliches Konsolidieren auf einer Doppelbandpresse wird zwar auch erwähnt, dies ist aber - wie oben ausgeführt - bei PEI nicht durchführbar.

Schließlich beschreibt die EP-A 555 345 ein luftdurchlässiges Fasergebilde aus einem naß oder trocken hergestellten Mischvlies aus Thermoplastfasern und Verstärkungsfasern. Dieses nicht vernadelte Mischvlies wird durch vorsichtiges Anschmelzen der Thermoplastfasern teilverfestigt, indem diese sich an den Kreuzungsstellen mit den Verstärkungsfasern verbinden. Eine kontinuierliche Herstellung des Fasergebildes ist nicht beschrieben. Das Verfahren hat darüber hinaus den Nachteil, daß die nicht benetzten Verstärkungsfasern bei der Lagerung korrodieren können, außerdem ist auch hier bei der Formkörperherstellung eine vollständige Durchtränkung schwierig. Auch hier sind PEI-Verstärkungsfasern nicht erwähnt.

Polyetherimide sind thermoplastische Kunststoffe auf Basis von Phthalimiden und Bisphenol A. Sie zeichnen sich vor allem durch eine hervorragende Wärmeformbeständigkeit auch noch bei Temperaturen von etwa 200 bis 220 °C aus, daneben zeigen sie eine hohe Festigkeit und Dimensionsstabilität sowie ein günstiges Brandverhalten. Sie sind ausführlich im Kunststoff-Handbuch von Becker/Braun, Band 3/3, Carl-Hanser-Verlag, Seiten 297 - 335 beschrieben. Ein entsprechendes Handelsprodukt ist ULTEM der Fa. General Electric Plastics.

Der Erfindung lag nun die Aufgabe zugrunde, ein kontinuierliches Verfahren zur Herstellung eines Halbzeugs aus PEI und Verstärkungsfasern zu entwickeln, das zu Fertigteilen umformbar ist, welche hervorragende, gut reproduzierbare mechanische Eigenschaften aufweisen. Eine weitere Aufgabe der Erfindung ist die Bereitstellung eines Halbzeugs, welches zu Fertigteilen mit hoher Wärmeformbeständigkeit, Festigkeit und Dimensionsstabilität sowie günstigem Brandverhalten verarbeitbar ist. Diese Aufgaben werden durch das erfindungsgemäße Verfahren gelöst. Dieses umfaßt folgende Verfahrensschritte:
A. PEI-Fasern und individuelle, nicht gebundene synthetische Verstärkungsfasern werden nach dem Krempel- oder Airlay-Verfahren trocken miteinander vermischt. Neben reinen PEI-Fasern können auch Mischungen mit untergeordneten Mengen anderer Thermoplastfasern, z.B. aus Polycarbonat, sowie Fasern aus entsprechenden Polymermischungen eingesetzt werden. Die Fasern lassen sich auf bekannte Weise durch Verspinnen der Thermoplastschmelzen oder -lösungen herstellen. Die PEI-Fasern weisen im allgemeinen eine mittlere Länge von 10 bis 200 mm auf.
   Als Verstärkungsfasern können Glasfasern, sowie Kohlenstoffasern und Aramidfasern eingesetzt werden. Die beiden letztgenannten Fasern ergeben Fertigteile mit besonders hoher Steifigkeit bzw. Festigkeit. Die eingesetzten Verstärkungsfasern weisen im allgemeinen eine mittlere Länge von 30 bis 300 mm, vorzugsweise von mehr als 50 mm, auf. Damit sie gut mit den PEI-Fasern mischbar sind, müssen sie als individuelle, nicht gebundene Fasern vorliegen, d.h. sie dürfen nicht mit polymeren Bindemitteln gebunden sein. Die PEI-Fasern und Verstärkungsfasern werden im Gewichtsverhältnis 10 : 90 bis 80 : 20, vorzugsweise 25 : 75 bis 55 : 45, nach dem Krempel- oder Airlay-Verfahren, wie sie aus der Textiltechnologie bekannt sind, trocken miteinander vermischt. Dabei entsteht ein als endlose Bahn vorliegendes Mischvlies.
B. Das erhaltene Mischvlies wird durch Nadeln verfestigt. Dies kann auf üblichen Nadelstühlen mit Filznadeln geschehen. Durch das Nadeln werden einerseits die Verstärkungsfasern etwas gebrochen, so daß die mittlere Faserlänge reduziert wird; andererseits werden einzelne Fasern durch das Vlies hindurchgezogen, so daß sie senkrecht zur Hauptfläche ausgerichtet werden und im Fertigteil in dieser Richtung verstärkend wirken können. Außerdem bewirken diese senkrecht gerichteten Fasern, daß das Halbzeug beim Aufheizen in z-Richtung expandiert. Dieser sogenannte "Loft" kann zur Herstellung von Leichtbauteilen durch Teilkonsolidieren ausgenützt werden. Schließlich wird durch das erfindungsgemäße Nadeln das Mischvlies verfestigt, so daß es in den nachfolgenden Verfahrensschritten problemlos handhabbar ist.
   Bei einer speziellen Ausführungsform der Erfindung wird das genadelte Mischvlies in einer Richtung verstreckt. Dadurch sind auch im Fertigteil die Verstärkungsfasern in dieser Richtung ausgerichtet und bewirken so ein besonders hohes mechanisches Niveau in dieser Richtung.
C. Das verfestigte Mischvlies wird in einem Kontakt- oder einem Umluftofen oder durch IR-Bestrahlung auf Temperaturen oberhalb der Erweichungstemperatur des PEI erwärmt. Vorzugsweise sollte die Temperatur 20 bis 60 °C oberhalb der Erweichungstemperatur liegen; bevorzugt liegt sie zwischen 380 und 420 °C, insbesondere zwischen 390 und 410 °C.
D. Unmittelbar anschließend wird das erwärmte Mischvlies auf einem Kalander, in einem Glättwerk oder in einer Kaschiereinrichtung verpreßt. Dabei werden vorzugsweise Drücke zwischen 1 und 10 bar angewandt. Das entstandene flächige Halbzeug weist erfindungsgemäß eine Dicke von 0,2 bis 4,0 mm, vorzugsweise von 0,5 bis 3,0 mm auf. Die mittlere Länge der Verstärkungsfasern im fertigen Halbzeug beträgt 20 bis 200 mm, vorzugsweise sind die Fasern im Mittel mehr als 40 mm lang.
E. In einer bevorzugten Ausführungsform der Erfindung werden beim Verpressen ein- oder beidseitig Funktionsschichten an das erwärmte Mischvlies herangeführt und mitverpreßt. Dies können Dekorschichten, dünne Faservliese, Thermoplastfolien oder Stoffbahnen sein. Grundsätzlich können die Funktionsschichten auch erst bei der Formteilherstellung aufgebracht werden.

Ein weiterer Gegenstand der Erfindung ist ein thermoplastisch verformbares Halbzeug einer Dicke von 0,2 bis 4,0 mm aus 10 bis 80 Gew.% PEI und 90 bis 20 Gew.% Verstärkungsfasern einer Länge von 40 bis 200 mm, in denen das PEI und die Verstärkungsfasern homogen miteinander vermischt sind. Das Merkmal "homogen miteinander vermischt" bedeutet, daß an einem Schliffbild des Halbzeugs bei mikroskopischer Betrachtung bei einer Vergrößerung von 1 : 100 keine inhomogenen Bereiche (Ansammlungen von Verstärkungsfasern als Faserbündel) sichtbar sein dürfen, die Fasern müssen vielmehr als Einzelfilamente erkennbar sein.

Die EP-A 654 341 beschreibt ein Verfahren zur Herstellung eines Halbzeugs, bei dem in einem Extruder Thermoplastschmelze und Verstärkungsfasern einer Länge von 13 bis 100 mm derart schonend vermischt werden, daß nur ein geringer Faserbruch stattfindet, und die Mischung dann durch eine Breitschlitzdüse ausgepreßt wird. Bevorzugter Thermoplast ist Polypropylen; neben einer Vielzahl anderer Thermoplasten sind auch PEI genannt. Versucht man, dieses Verfahren bei PEI in die Praxis umzusetzen, so stellt man einen sehr starken Faserbruch fest, d.h. die Fasern werden auf Längen unterhalb von 40 mm zerkleinert. Dies rührt wohl daher, daß bei den notwendigen hohen Temperaturen um 400°C bei Zugabe der Glasfasern in den Extruder die Viskosität der Schmelze so hoch wird, daß auch bei verhältnismäßig geringer Scherwirkung der Extruderschnecke Faserbruch stattfindet.

Das erfindungsgemäße Halbzeug kann in kundenspezifische Zuschnitte vereinzelt und gestapelt werden; dünneres Halbzeug kann auch aufgerollt und so gelagert werden. Es kann dann zu dreidimensionalen Fertigteilen thermoplastisch verformt werden. Dazu werden entsprechende Zuschnitte auf Temperaturen oberhalb der Erweichungstemperatur des PEI erwärmt und in üblichen zweiteiligen Formen verpreßt oder durch Tiefziehen verformt. Die Fertigteile sind im Transportsektor als Automobil-, Eisenbahn- und Flugzeuginnenteile, sowie als Karosserieteile verwendbar, insbesondere dort, wo hohe Anforderungen an Wärmeformbeständigkeit und Dimensionsstabilität gestellt werden. Ein besonders wichtiges Anwendungsgebiet sind Flugzeuginnenteile, wo es im Brandfall auf geringe Rauchgasdichte und niedrige Toxizität der Brandgase ankommt.

## Patentansprüche

1. Kontinuierliches Verfahren zur Herstellung eines thermoplastisch verformbaren Halbzeugs einer Dicke von 0,2 bis 4,0 mm aus 10 bis 80 Gew.% eines Polyetherimids (PEI) und 90 bis 20 Gew.% Verstärkungsfasern einer mittleren Länge von 20 bis 200 mm durch folgende Verfahrensschritte:
A. PEI-Fasern und individuelle, nicht gebundene synthetische Verstärkungsfasern werden nach dem Airlay- oder Krempel/erfahren trocken miteinander zu einer endlosen Bahn vermischt,
B. das erhaltene Mischvlies wird durch Nadeln verfestigt,
C. das verfestigte Mischvlies wird in einem Kontakt- oder einem Umluftofen oder durch Infrarot-Bestrahlung auf Temperaturen oberhalb der Erweichungstemperatur des PEI erwärmt,
D. anschließend wird das erwärmte Mischvlies auf einem Kalander, in einem Glättwerk oder in einer Kaschiereinrichtung zum Halbzeug verpreßt,
E. gegebenenfalls werden gleichzeitig oder anschließend Funktionsschichten auf das Halbzeug aufgepreßt.

2. Verfahren nach Anspruch 1, **dadurch gekennzeichnet, daß** die Verstärkungsfasern Glasfasern, Kohlenstoffasern oder Aramidfasern sind.

3. Verfahren nach Anspruch 1, **dadurch gekennzeichnet, daß** das genadelte Mischvlies in einer Richtung verstreckt wird.

4. Thermoplastisch verformbares Halbzeug einer Dicke von 0,2 bis 4,0 mm aus 10 bis 80 Gew.% PEI und 90 bis 20 Gew.% Verstärkungsfasern einer mittleren Länge von 40 bis 200 mm, **dadurch gekennzeichnet, daß** Verstärkungsfasern und PEI homogen miteinander vermischt sind.

5. Verwendung des Halbzeugs nach Anspruch 4 zur Herstellung von dreidimensionalen Fertigteilen durch Heißumformen in einer Presse.

6. Verwendung des Halbzeugs nach Anspruch 5 zur Herstellung von Fertigteilen für die Luft- und Raumfahrt.

## Claims

1. A continuous process for producing a thermoplastically deformable semifinished product whose thickness is from 0.2 to 4.0 mm, composed of from 10 to 80 % by weight of a polyether imide (PEI) and from 90 to 20 % by weight of reinforcing fibers whose average length is from 20 to 200 mm, the steps in the process being as follows:
A. dry-mixing PEI fibers and individual, non-bonded synthetic reinforcing fibers with one another to give a continuous web, using the airlay process or the carding process,
B. consolidating the resultant mixed non-woven by needling,
C. heating the consolidated mixed non-woven in a convection oven or by infrared-red radiation to temperatures above the softening point of the PEl,
D. then pressing the heated mixed non-woven on a calender or in a polishing stack to give the semifinished product,
E. where appropriate, simultaneously or subsequently using pressure to apply functional layers to the semifinished product.

2. The process as claimed in claim 1, **characterized in that** the reinforcing fibers are glass fibers, carbon fibers or aramide fibers.

3. The process as claimed in claim 1, **characterized in that** the needled mixed non-woven is stretched in one direction.

4. A thermoplastically deformable semifinished product having a thickness of from 0.2 to 4.0 mm, composed of of from 10 to 80 % by weight of PEl and from 90 to 20 % by weight of reinforcing fibers having an average length of from 40 to 200 mm, **characterized in that** the reinforcing fibers and the PEl are homogeneously mixed with one another.

5. The use of the semifinished product as claimed in claim 4 for producing three-dimensional finished parts by thermoforming in a press.

6. The use of the semifinished product as claimed in claim 5 for producing finished parts for aircrafts and space-ships.

## Revendications

1. Procédé continu pour la fabrication d'un demi-produit thermoformable, d'une épaisseur de 0,2 à 4,0 mm, constitué de 10 à 80 % en poids d'un polyéthérimide (PEI) et de 90 à 20 % en poids de fibres de renfort d'une longueur moyenne de 20 à 200 mm, à l'aide des étapes de procédé suivantes :
A. des fibres PEI et des fibres de renfort synthétiques individuelles non liées sont mélangées entre elles à sec en une bande sans fin, selon le procédé par voie cardée ou airlay,
B. le non-tissé mixte obtenu est renforcé par aiguilletage,
C. le non-tissé renforcé est échauffé à des températures supérieures à la température de ramollissement du PEI, dans un four à contact ou à circulation d'air, ou par irradiation d'infrarouge,
D. ensuite, le non-tissé mixte échauffé est pressé en un demi-produit, sur une calandre, dans une lisseuse ou dans un doubleuse,
E. éventuellement, des couches fonctionnelles sont appliquées par pressage, simultanément ou ultérieurement, sur le demi-produit.

2. Procédé selon la revendication 1, **caractérisé en ce que** les fibres de renfort sont des fibres de verre, des fibres de carbone ou des fibres aramide.

3. Procédé selon la revendication 1, **caractérisé en ce que** le non-tissé mixte aiguilleté est étiré dans une direction.

4. Demi-produit thermoformable d'une épaisseur de 0,2 et 4,0 mm, constitué de 10 à 80 % en poids d'un polyéthérimide (PEI) et de 90 à 20 % en poids de fibres de renfort d'une longueur moyenne de 40 à 200 mm, **caractérisé en ce que** les fibres de renfort et de PEI sont mélangées entre elles de façon homogène.

5. Utilisation du demi-produit selon la revendication 4, pour la fabrication de pièces finies tridimensionnelles par thermoformage dans une presse.

6. Utilisation de demi-produit selon la revendication 5 pour la fabrication de pièces finies pour l'aéronautique et l'astronautique.
